# EUROPÄISCHE PATENTSCHRIFT

(11) **EP 2 549 687 B1**
(45) Veröffentlichungstag und Bekanntmachung des Hinweises auf die Patenterteilung: **11.12.2013**
(21) Anmeldenummer: 12002453.4
(22) Anmeldetag: 04.04.2012
(51) Int. Cl.: H04L 12/40, H04L 12/403, H04L 12/851

(54) **Steuerungsverfahren für einen Torantrieb und Torantrieb**
Control method for gate drive and gate drive
Procédé de commande pour un entraînement de porte et entraînement de porte

(30) Priorität: 20.07.2011 DE 102011108102
(43) Veröffentlichungstag der Anmeldung: 23.01.2013
(73) Patentinhaber: Marantec Antriebs- und Steuerungstechnik GmbH & Co. KG., 33428 Marienfeld (DE)
(72) Erfinder: Hörmann, Michael, 33790 Halle / Westf. (DE)
(74) Vertreter: Laufhütte, Dieter

(56) Entgegenhaltungen:
- EP-A1- 1 771 027
- US-A1- 2009 196 306

## Beschreibung

Die Erfindung betrifft ein Verfahren zur Steuerung eines Torantriebs mit mehreren Komponenten, die kommunikativ über ein digitales Bussystem miteinander in Verbindung stehen, wobei mindestens eine Komponente eine Sicherheits-Komponente ist, die das Auftreten eines sicherheitsrelevanten Ereignisses über den Datenbus meldet.

Ein solches System besteht beispielsweise aus einer Antriebssteüerung, die über das Bussystem mit mehreren Sicherheits-Komponenten, beispielweise mit einer Schließkantensicherung in Verbindung steht. Die Aufgabe der Schließkantensicherung besteht darin, mögliche Gefahrensituationen zu erkennen und diese über das Bussystem der zentralen Steuerung als sicherheitsrelevantes Ereignis, das eine geeignete Reaktion erforderlich macht, zu melden.

Eine Ausführung eines derartigen Systems ist aus der DE 20 2005 021 457 U1 bekannt. Die zu übertragenden Daten, über welche die Sicherheits-Komponente ein sicherheitsrelevantes Ereignis meldet, werden dabei in ein Telegramm verpackt und über den Datenbus versendet. Da die Kommunikation auf dem Datenbus von einer Master-Komponente gesteuert wird, erfolgt die Übertragung jedoch erst dann, wenn die Master-Komponente die Sicherheits-Komponente das nächste Mal anspricht. Wie schnell ein Telegramm übertragen wird, ist daher sowohl von der Übertragungsrate als auch von der Anzahl der Busteilnehmer abhängig.

Sicherheitsrelevante Komponenten wie z. B. die Schließkantensicherung oder Ruhestromkreise sollen ein sicherheitsrelevantes Ereignis jedoch möglichst schnell und ohne zeitliche Verzögerung mitteilen, um gegebenenfalls reaktionsschnell auf vorliegende Gefahrensituationen reagieren zu können.

In der US 2009/196306 A1 ist ein Verfahren zur Steuerung mit mehreren Komponenten, welche kommunikativ über ein digitales Bussystem miteinander in Verbindung stehen, offenbart. Dabei ist mindestens eine Komponente eine solche, die das Auftreten eines Ereignisses über den Datenbus meldet. Das Busprotokoll reserviert eine zyklische Phase, nämlich TXOP1, TXOP2, zur Meldung eines Ereignisses. Durch dieses Verfahren wird ein Konkurrenzzugriff mit einer Kollisionsmeldung dargestellt, wobei die einzelne Komponenten jeweils eine Prioritätsinformation übertragen und die Konkurrenzfenster prioritätsbasierte Konkurrenzfenster sind, welche den unterschiedlichen Prioritätspegeln entsprechen. Den Komponenten werden jeweils eines der mehreren Konkurrenzfenster innerhalb einer gegebenen gemeinsam genutzten Konkurrenz-TXOP basierend auf der übertragenen Prioritätsinformation zugeordnet.

In der DE 10 2008 058 401 B3 wurde die vorgenannte Problematik bereits erkannt und ein Lösungsansatz aufgezeigt. Die technische Lehre dieser Druckschrift schlägt vor, ein sicherheitsrelevantes Ereignis nicht per Datenübertragung mittels eines Datentelegramms zu melden, sondern die meldende Sicherheits-Komponente unterbricht statt dessen für einen bestimmten Zeitraum jegliche Datenkommunikation auf dem digitalen Datenbus. Die Blockierung der Buskommunikation bewirkt ein Ausbleiben jeglicher Datenkommunikation zwischen den Komponenten, woraus diese die Meldung eines sicherheitsrelevanten Ereignisses ableiten. Nachteilig an der vorgestellten Lösung ist jedoch, dass jede Datenkommunikation über den Datenbus nach dem Auftreten eines Ereignisses konsequent über einen bestimmten Zeitrahmen verhindert wird. Zwar lässt sich ein sicherheitsrelevantes Ereignis ohne zeitliche Verzögerung erkennen, allerdings kann die Frage nach der auslösenden Sicherheits-Komponente erst nach Aufhebung der Busblockade beantwortet werden, da hierzu eine entsprechende Abfrage der Komponenten notwendig ist.

Aufgabe der vorliegenden Erfindung ist es daher, ein Verfahren zur Steuerung eines Torantriebs sowie ein Steuerungssystem für einen Torantrieb zur Verfügung zu stellen, das bzw. der die vorgenannte Problematik zu überwinden weiß.

Diese Aufgabe wird durch ein Verfahren zur Steuerung eines Torantriebs gemäß den Merkmalen des unabhängigen Anspruchs 1 sowie gemäß den Merkmalen der nebengeordneten Ansprüche 10,11 gelöst. Vorteilhafte Ausgestaltungen der Erfindung sind dabei Gegenstand der abhängigen Unteransprüche.

Die vorliegende Erfindung betrifft also ein Verfahren zur Steuerung eines Torantriebs mit mehreren Komponenten, die miteinander kommunikativ über ein digitales Bussystem in Verbindung stehen. Dabei ist wenigstens eine Sicherheits-Komponente wie z. B. eine Schließkantensicherung, Ruhestromkreise oder eine Lichtschranke vorgesehen, die sicherheitsrelevante Ereignisse in ihrem Zuständigkeitsbereich detektiert und das Auftreten eines sicherheitsrelevanten Ereignisses über den Datenbus meldet.

Als digitaler Datenbus kann dabei z. B. eines der auf dem Markt erhältlichen Bussysteme RS 485, Profibus, Ethernet, usw. eingesetzt werden.

Erfindungsgemäß wird durch das Busprotokoll eine zyklische Sicherheitsphase zur Meldung eines sicherheitsrelevanten Ereignisses reserviert, wobei während der Sicherheitsphase keine Datenübertragung über das Bussystem erfolgt, was der Normalfall ist, und wobei wenigstens eine Komponente geeignet ist, jede Datenübertragung über das Bussystem während der Sicherheitsphase als Meldung eines sicherheitsrelevanten Ereignisses zu erkennen und Daten zu übertragen. Die Sicherheitsphase stellt ein Zeitintervall mit bestimmter Länge dar, das sich zu festgelegten Zeitpunkten wiederholt. Erfindungswesentlich ist es, dass alle beteiligten Komponenten Kenntnis über den jeweiligen Start- bzw. Endzeitpunkt der Sicherheitsphase und bzw. oder über deren Intervalldauer erlangen. Das erfindungsgemäße Verfahren macht eine einheitliche Synchronisierung der Komponenten erforderlich.

Im Normalfall überträgt, wie oben erwähnt, während der Sicherheitsphase keine Komponente Daten über das Bussystem. Wird jedoch ein sicherheitsrelevantes Ereignis von einer der Sicherheits-Komponenten detektiert, so beginnt diese ohne vorhergehende Aufforderung durch die Master-Komponente bzw. eine sonstige Buskomponente mit einer Datenübertragung während der Sicherheitsphase. Dieser geänderte Zustand des Bussystems kann von wenigstens einer Komponente des Torantriebs problemlos erkannt werden. Demnach führt jede Art von Datenübertragung während der Sicherhe itsphase dazu, dass wenigstens eine empfangende Komponente diese als Meldung eines sicherheitsrelevanten Ereignisses auslegt. Die konkrete Art und Weise der erfolgten Datenübertragung während der Sicherheitsphase bzw. deren

Dateninhalt ist für den Grundgedanken der Erfindung unerheblich, die empfangende Komponente muss nur einen Unterschied zum Normalfall erkennen können. Für die Ausführung des Verfahrens zählt also nur die Tatsache, dass während der Sicherheitsphase eine Datenübertragung stattfindet, wodurch ein nicht dem Regelfall entsprechender Zustand des Torantriebs erkennbar ist.

Vorzugsweise wird eine Meldung eines sicherheitsrelevanten Ereignisses erkannt, sobald innerhalb der Sicherheitsphase mindestens ein Zeichen empfangen wird. Während der Sicherheitsphase besteht grundsätzlich für jede Sicherheits-Komponente die Möglichkeit, eine Übertragung über das Bussystem zu initiieren.

Ein besonderer Vorteil der Erfindung besteht nun darin, dass eine Datenübertragung während der Sicherheitsphase die reguläre Buskommunikation nicht beeinträchtigt. Daher kann auch nach dem Auftreten eines sicherheitsrelevanten Ereignisses und deren Meldung die Kommunikation der einzelnen Komponenten über das Bussystem aufrechterhalten werden. Eine Blockade des Bussystems sowie eine erforderliche Wiederherstellung der Buskommunikation sind daher nicht erforderlich.

In einer besonders vorteilhaften Ausführung der Erfindung ist das verwendete digitale Bussystem als serielles Master-Slave-Bussystem ausgeführt. Die Kommunikation des Busmasters und der Slave-Komponenten erfolgt immer innerhalb eines definierten Kommunikationsfensters, das vorzugsweise durch eine konstante Fensterlänge definiert ist. Die zu übertragenden Daten werden in einzelne Telegramme verpackt, die zu bestimmten Zeitpunkten innerhalb des Kommunikationsfensters zwischen Master und Slave übertragen werden können. Beispielsweise existiert ein Master-Telegramm, mit dem der Busmaster eine bestimmte Slave-Komponente des Torantriebs anspricht, welche wiederum mit einem Slave-Telegramm eine Antwort an den Busmaster übermittelt. Während eines Kommunikationsfensters wird zu jeder Zeit immer nur eine einzige Slave-Komponente durch die Master-Komponente angesprochen. In der vorteilhaften Ausführung der Erfindung ist es nun vorgesehen, dass in jedem Kommunikationsfenster wenigstens eine Sicherheitsphase reserviert ist, die für die Meldung eines sicherheitsrelevanten Ereignisses zur Verfügung steht.

Vorzugsweise beginnt und endet das definierte Kommunikationsfenster mit dem Stoppbit des ersten gesendeten bzw. empfangenen Bytes des Master-Telegramms. Alle am Datenbus angeschlossenen Komponenten synchronisieren ihr Bustiming auf diesen Zeitpunkt.

Zwar wird während eines Kommunikationsfensters nur eine einzige Slave-Komponente angesprochen, die Meldung eines sicherheitsrelevanten Ereignisses während der Sicherheitsphase des Kommunikationsfensters kann jedoch von jeder beliebigen Sicherheits-Komponente initiiert werden. Folglich besteht die Möglichkeit, dass mehrere Module gleichzeitig eine Datenübertragung während der Sicherheitsphase initiieren. Vor diesem Hintergrund ist es zweckmäßig, dass jede Komponente vor dem Senden während der Sicherheitsphase überprüft, ob bereits eine Datenübertragung über den Bus während der Sicherheitsphase anhängig ist. Wird eine bereits anhängige Datenübertragung erkannt, so kann die Sicherheits-Komponente ihren eigenen Sendevorgang verwerfen und/oder unterbrechen und bzw. oder auf einen späteren Zeitpunkt verschieben.

Prinzipiell ist eine unbestimmte Datenübertragung während der Sicherheitsphase für die Realisierung des erfindungsgemäßen Verfahrens ausreichend, dennoch kann sich die Verwendung eines Sicherheitstelegramms zur Meldung wenigstens eines sicherheitsrelevanten Ereignisses durch wenigstens eine Sicherheits-Komponente als zweckmäßig erweisen. Das eingesetzte Sicherheitstelegramm beinhaltet vorzugsweise Absenderinformationen, wodurch die meldende Komponente eindeutig identifizierbar ist. Hierdurch kann jede das Sicherheitstelegramm empfangene Komponente innerhalb des Bussystems ohne zeitliche Verzögerung feststellen, welche Sicherheits-Komponente ein sicherheitsrelevantes Ereignis detektiert und gemeldet hat. Die Adressinformationen beinhalten beispielsweise Informationen über den Gerätetyp der meldenden Sicherheits-Komponente. Weiterhin kann das Sicherheitstelegramm vorzugsweise beliebige Informationen bezüglich des aufgetretenen Ereignisses beinhalten, um den übrigen Komponenten, insbesondere der zentralen Torsteuerung, konkrete Angaben über den Zeitpunkt des Ereignisses, die Art des Ereignisses bzw. dessen Priorität oder Relevanz übermitteln zu können.

Wenigstens eine Komponente, insbesondere der Busmaster, kann durch Auswertung des Sicherheitstelegramms den Absender der Meldung eines sicherheitsrelevanten Ereignisses feststellen. Beispielsweise kann die Torsteuerung auf Grundlage der Absenderinformationen und möglicherweise sonstiger Informationen des Sicherheitstelegramms eine geeignete Reaktion des Torantriebs definieren.

Unter Umständen ist es bei einem Auftreten von bestimmten sicherheitsrelevanten Ereignissen nicht unbedingt notwendig, den Torantrieb umgehend zu deaktivieren. In diesem Fall kann eine geeignete Regelung des Torantriebs erfolgen, beispielsweise die Umkehrung der Antriebsrichtung bzw. die Drosselung der Antriebsgeschwindigkeit, Ausgabe einer Warnmeldung, etc.

Das Sicherheitstelegramm umfasst vorteilhafterweise einen Telegrammkopf, auch als Header bezeichnet, der die voranstehend beschriebenen Absenderinformationen trägt. Vorzugsweise gleicht der Aufbau des Headers im Wesentlichen dem Aufbau der sonstigen Bus-Telegramme, insbesondere dem Aufbau des Master- bzw. Slave-Telegramms. Ferner kann das Sicherheitstelegramm eine vorangestellte Präambel aufweisen, die eine Erkennung eines Sicherheitstelegramms durch die empfangenen Komponenten vereinfacht. Vorzugsweise trägt eine bestimmte Anzahl an Bytes der Präambel den Hex-Wert 0x00. Hierdurch wird der Buspegel beim Senden eines Sicherheitstelegramms während der Sicherheitsphase am Anfang auf Null gezogen, so dass eine umgehende Erkennung eines Sicherheitstelegramms durch die empfangenen Komponenten sichergestellt ist.

Zur Überprüfung der Busbelegung muss die Sicherheits-Komponente vor der Übermittlung eines Sicherheitstelegramms folglich nur den anliegenden Buspegel prüfen bzw. den eigenen Empfangsspeicher auf bereits während der Sicherheitsphase empfangene Bytes hin untersuchen.

Vorteilhafterweise wird der Sendevorgang einer während der Sicherheitsphase sendenden Sicherheits-Komponente solange wiederholt, bis die Sicherheits-Komponente vom Busmaster angesprochen wird. Zweckmäßig wiederholt die Sicherheits-Komponente die Datenübertragung während jeder zyklisch wiederkehrenden Sicherheitsphase, bis sie über ein an sie adressiertes Master-Telegramm direkt angesprochen wird.

Die Erfindung betrifft des Weiteren ein Steuerungssystem für einen Torantrieb mit mehreren Komponenten, die kommunikativ über ein digitales Bussystem miteinander in Verbindung stehen, wobei das Steuerungssystem zur Durchführung des Verfahrens nach einer der voranstehend beschriebenen vorteilhaften Ausführungen geeignet ist. Das erfindungsgemäße Steuerungssystem weist demnach offensichtlich dieselben Vorteile und Eigenschaften wie das erfindungsgemäße Verfahren auf, weshalb an dieser Stelle auf eine erneute Beschreibung verzichtet wird. Insbesondere weist das Steuerungssystem Mittel zur Implementierung des erfindungsgemäßen Busprotokolls auf.

Ferner betrifft die Erfindung einen Torantrieb mit einem integrierten erfindungsgemäßen Steuerungssystem.

Die vorliegende Erfindung soll im Folgenden anhand von Zeichnungen näher beschrieben werden. Es zeigen:
- Fig. 1:: eine Zeitdiagrammdarstellung eines Kommunikationsfensters und
- Fig. 2:: den prinzipiellen Aufbau eines Sicherheitstelegramms.

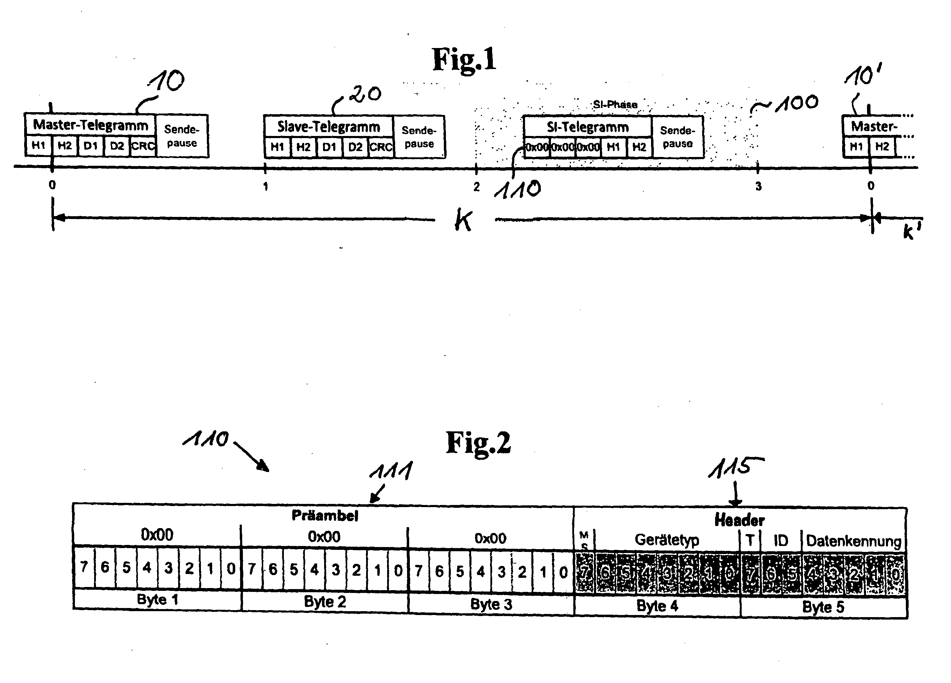

Figur 1 soll die Funktionsweise eines Ausführungsbeispiels des erfindungsgemäßen Steuerungssystems verdeutlichen, bei welchem ein Ausführungsbeispiel des erfindungsgemäßen Verfahrens zur Steuerung eines Torantriebs implementiert ist. In dem Ausführungsbeispiel des Steuerungssystems handelt es sich um einen Torantrieb mit mehreren Komponenten und einem digitalen Datenbus, über welchen die Komponenten miteinander kommunizieren, wobei mindestens eine Sicherheits-Komponente wie z. B. eine Schließkantensicherung oder eine Lichtschranke vorgesehen ist, welche das Auftreten eines sicherheitsrelevanten Ereignisses über den Datenbus an die übrigen Komponenten meldet.

Dabei ist eine zentrale Master-Komponente zur Steuerung der Kommunikation über den Datenbus vorgesehen. Diese spricht die einzelnen Slave-Komponenten jeweils einzeln und nacheinander an, wofür feste Kommunikationsfenster K, K' vorgesehen sind. Mindestens eine Slave-Komponente ist dabei eine Sicherheits-Komponente, wobei es sich auch bei den anderen Slave-Komponenten und/oder der Master-Komponente um Sicherheits-Komponenten handeln kann. Vorzugsweise übernimmt die zentrale Steuerungskomponente des Torantriebs die Funktion des BusMasters.

Figur 1 zeigt ein Zeitdiagramm, das die Kommunikation über den Datenbus innerhalb eines Kommunikationsfensters K darstellt. Im ersten Schritt richtet sich die Master-Komponente mit dem Master-Telegramm 10 an eine erste spezifische Slave-Komponente, die mit Hilfe der Headerinformation des Master-Telegramms 10 direkt adressiert wird. Innerhalb des dem Fenster K nachfolgenden Fensters K' adressiert die Master-Komponente mittels des Master-Telegramm 10' eine weitere Slave-Komponente des Torantriebssystems. Die Master-Komponente fragt nacheinander alle einzelnen Slave-Komponenten ab, wobei sich der Zyklus laufend wiederholt, so dass ein stetiger Datenaustausch zwischen Master- und Slave-Komponenten sichergestellt ist.

Die jeweilig angesprochene Slave-Komponente antwortet mit dem Slave-Telegramm 20 und stellt der Master-Komponente die abgefragten Daten bzw. Informationen als Datenpaket innerhalb des Telegramms 20 zur Verfügung.

Erfindungsgemäß wird innerhalb eines Kommunikationsfensters K, K' die Sicherheitsphase 100 reserviert, die einen konkreten Zeitabschnitt innerhalb des Kommunikationsfensters K, K' einnimmt. Im dargestellten Beispiel der Figur 1 reicht die Sicherheitsphase vom Zeitpunkt 2 bis zum Zeitpunkt 3 des Fensters K, wobei sich die Sicherheitsphase 100 an die Übertragung des Master-Telegramms 10 sowie des Slave-Telegramms 20 anschließt. Grundsätzlich lässt sich die Sicherheitsphase jedoch an beliebiger Stelle innerhalb des Kommunikationsfensters K, K' eingliedern.

Jedes Kommunikationsfenster K, K' beginnt und endet mit dem Stoppbit des ersten gesendeten bzw. empfangenen Byte des Master-Telegramms 10. Alle Komponenten des Torantriebs synchronisieren ihr Bustiming auf diesen präzisen Zeitpunkt. Alle Kommunikationsfenster K, K' haben stets eine konstante Länge.

Die vorgestellte Implementierung der Buskommunikation ermöglicht eine schnelle und unabhängig vom Telegrammverkehr erfolgende Meldung eines sicherheitsrelevanten Ereignisses. Detektiert eine Sicherheits-Komponente, beispielsweise eine Lichtschranke, ein sicherheitsrelevantes Ereignis, so beginnt die Sicherheits-Komponente mit der Übertragung eines Sicherheitstelegramms 110 während der Sicherheitsphase 100. Die Übertragung des Sicherheitstelegramms 110 sollte oder darf die definierten Zeitgrenzen der Sicherheitsphase 100 nicht überschreiten. Zu diesem Zweck ist die Zeitdauer der Sicherheitsphase 100 so dimensioniert, dass die vollständige Übertragung eines Sicherheitstelegramms 110 problemlos möglich ist.

Vor dem Beginn der Übertragung des Sicherheitstelegramms 110 überprüft die Sicherheits-Komponente, ob in der präsenten Sicherheitsphase 100 bereits eine Datenübertragung anhängig ist. In diesem Fall wird das Senden eines Sicherheitstelegramms 110 von der Sicherheits-Komponente verworfen oder alternativ auf einen späteren Zeitpunkt verschoben.

Grundsätzlich findet während des regulären Betriebs des Torantriebs keine Datenübertragung während der Sicherheitsphase 100 statt. Folglich ist es für das sichere Erkennen eines sicherheitsrelevanten Ereignisses ausreichend, wenn innerhalb der Sicherheitsphase 100 mindestens ein Zeichen durch eine beliebige Komponente übertragen und von einer beliebigen Komponente des Bussystems, insbesondere dem Busmaster, empfangen wird. Der vollständige und fehlerlose Empfang des abgesetzten Sicherheitstelegramms 110 ist demnach keine zwingende Voraussetzung für die zuverlässige Erkennung der Meldung eines sicherheitsrelevanten Ereignisses.

Vorzugsweise reagiert die Steuerung des Torantriebs immer mit einem sofortigen Stopp des Torantriebs, wenn während der Sicherheitsphase 100 eine unbestimmte Datenübertragung erkannt wird. Im Anschluss ermittelt der Busmaster den Absender des zu empfangenden Sicherheitstelegramms 100. Unter Berücksichtigung der erlangten Information kann sodann das weitere Verhalten des Torantriebs abgeleitet werden.

Darüber hinaus ist es zweckmäßig, dass die Übertragung eines Sicherheitstelegramms 110 solange fortgesetzt wird, bis die Master-Komponente die sendende Slave-Komponente explizit angesprochen hat oder der sicherheitsrelevante Zustand nicht mehr vorliegt.

Figur 2 zeigt den Aufbau des verwendeten Sicherheitstelegramms 110. Der Aufbau besteht aus einer voranstehenden, drei Byte langen Präambel 111, wobei jedes einzelne Byte Byte 1, Byte 2, Byte 3 den Hex-Wert "0x00" beinhaltet. Durch die Übertragung eines Sicherheitstelegramms 110 wird folglich der Buspegel kurzeitig auf Null gezogen, so dass die Überwachung der Busbelegung für die übrigen Komponenten stark vereinfacht wird. Die nicht sendenden Komponenten können äußerst schnell und nahezu fehlerfrei den Beginn einer Übertragung eines Sicherheitstelegramms 110 erkennen.

Nach der Präambel 111 schließt sich der Telegrammheader 115 an, der die beiden Bytes Byte 4, Byte 5 umfasst. Byte 4 dient zur Übermittlung von Informationen, die einem spezifischen Gerätetyp zugeordnet werden können und somit den Absender des Sicherheitstelegramms 110 eindeutig ausweisen. Ferner können im Byte 5 eine Datenkennung sowie eine ID übertragen werden.

Die Struktur des Headers 115 entspricht im Wesentlichen der Headerstruktur im Master- und Slave-Telegramm 10, 20. Allerdings kann im Gegensatz zu den Master- und Slave-Telegrammen 10, 20 innerhalb des Sicherheitstelegramms 110 auf ein CRC-Prüfverfahren verzichtet werden, da für die Erkennung eines sicherheitsrelevanten Ereignisses nur der Empfang von beliebigen Zeichen innerhalb der Sicherheitsphase 100 relevant ist und der genaue Telegramminhalt lediglich eine untergeordnete Rolle spielt. Ein CRC-Prüfverfahren wird daher an dieser Stelle als überflüssig angesehen.

## Patentansprüche

1. Verfahren zur Steuerung eines Torantriebs mit mehreren Komponenten, die kommunikativ über ein digitales Bussystem miteinander in Verbindung stehen, wobei mindestens eine Komponente eine Sicherheits-Komponente ist, die das Auftreten eines sicherheitsrelevanten Ereignisses über den Datenbus meldet,
**dadurch gekennzeichnet,**
**dass** das Busprotokoll eine zyklische Sicherheitsphase (100) zur Meldung eines sicherheitsrelevanten Ereignisses reserviert, wobei während des regulären Betriebs des Torantriebs während der Sicherheitsphase (100) keine Datenübertragung über das Bussystem erfolgt, und wobei wenigstens eine Komponente geeignet ist, jede Datenübertragung über das Bussystem während der Sicherheitsphase (100) als Meldung eines sicherheitsrelevanten Ereignisses zu erkennen und Daten zu übertragen.

2. Verfahren nach Anspruch 1, **dadurch gekennzeichnet, dass** alle Komponenten Kenntnis über den jeweiligen Start- bzw. Endpunkt der Sicherheitsphase erlangen.

3. Verfahren nach einem der Ansprüche 1 oder 2, **dadurch gekennzeichnet, dass** das Bussystem ein serielles Master-Slave-Bussystem mit einem zyklischen Kommunikationsfenster ist, wobei das Kommunikationsfenster wenigstens einen Abfragezyklus genau einer Slave-Komponente durch die Master-Komponente und wenigstens eine Sicherheitsphase (100) beinhaltet.

4. Verfahren nach einem der vorhergehenden Ansprüche, **dadurch gekennzeichnet, dass** jede Komponente vor dem Senden während der Sicherheitsphase überprüft, ob bereits eine Datenübertragung über den Bus während der Sicherheitsphase (100) erfolgt und gegebenenfalls ihren eigenen Sendevorgang verwirft und/oder unterbricht und/oder auf einen späteren Zeitpunkt verschiebt.

5. Verfahren nach einem der vorhergehenden Ansprüche, **dadurch gekennzeichnet, dass** wenigstens eine Sicherheits-Komponente nach Auftreten wenigstens eines sicherheitsrelevanten Ereignisses ein Sicherheitstelegramm (110) während der Sicherheitsphase (100) überträgt, das vorzugsweise Absenderinformationen beinhaltet, insbesondere Informationen bezüglich des Gerätetyps der sendenden Sicherheits-Komponente.

6. Verfahren nach Anspruch 5, **dadurch gekennzeichnet, dass** das Sicherheitstelegramm mit einer Präambel (111) beginnt, wobei die Präambel (111) vorzugsweise mit einer bestimmte Anzahl von Bytes mit dem Wert 0x00 beginnt.

7. Verfahren nach einem der vorhergehenden Ansprüche, **dadurch gekennzeichnet, dass** wenigstens eine Komponente, insbesondere der Bus-Master, nach der Erkennung der Meldung eines sicherheitsrelevanten Ereignisses den Absender der übertragenen Daten während des Sicherheitsphase (100) ermittelt, insbesondere durch Auswertung des Sicherheitsteiegramms (110) , wobei gegebenenfalls auf Grundlage der Absenderinformation eine passende Reaktion des Torantriebs bestimmt wird.

8. Verfahren nach einem der vorhergehenden Ansprüche, **dadurch gekennzeichnet, dass** nach der Meldung eines sicherheitsrelevanten Ereignisses, d.h. einer Datenübertragung während der Sicherheitsphase (100), die Kommunikationsmöglichkeit über den Datenbus erhalten bleibt.

9. Verfahren nach einem der vorhergehenden Ansprüche, **dadurch gekennzeichnet, dass** der Motor des Torantriebs bei Erkennung eines sicherheitsrelevanten Ereignisses gestoppt und/oder zurückgefahren wird.

10. Verfahren nach einem der vorhergehenden Ansprüche, **dadurch gekennzeichnet, dass** der Sendevorgang einer während der Sicherheitsphase (100) sendenden Sicherheits-Komponente solange wiederholt wird, bis die Sicherheits-Komponente vom Bus-Master angesprochen wird.

11. Steuerungssystem für einen Torantrieb mit mehreren Komponenten, die kommunikativ über ein digitales Bussystem miteinander in Verbindung stehen, zur Durchführung des Verfahrens nach einem der vorhergehenden Ansprüche.

12. Torantrieb mit einem Steuerungssystem gemäß Anspruch 11.

## Claims

1. A method for controlling a door drive having a plurality of components which are communicatively connected to one another over a digital bus system, wherein at least one component is a safety component which reports the occurrence of a safety-relevant event over the data bus,
**characterized in that**
the bus protocol reserves a cyclic safety phase (100) for reporting a safety-relevant event, wherein no data transmission takes place over the bus system during the regular operation of the door drive during the safety phase (100) and wherein at least one component is suitable to recognize each data transmission over the bus system during the safety phase (100) as a report of a safety-relevant event and to transmit data.

2. A method in accordance with claim 1, **characterized in that** all components acquire knowledge of the respective start time or end time of the safety phase.

3. A method in accordance with any of claims 1 or 2, **characterized in that** the bus system is a serial master-slave bus system having a cyclic communication window, with the communication window including at least one interrogation cycle of exactly one slave component by the master component and at least one safety phase (100).

4. A method in accordance with any one of the preceding claims, **characterized in that** each component checks whether a data transmission is already taking place over the bus during the safety phase (100) before the transmission during the safety phase and optionally discards and/or interrupts its own transmission process and/or postpones it to a later time.

5. A method in accordance with any one of the preceding claims, **characterized in that** at least one safety component transmits a safety telegram (110) during the safety phase (100) which preferably includes sender information, in particular information with respect to the device type of the transmitting safety component, after occurrence of at least one safety-relevant event.

6. A method in accordance with claim 5, **characterized in that** the safety telegram starts with a preamble (111), with the preamble (111) preferably starting with a specific number of bytes having the value 0x00.

7. A method in accordance with any one of the preceding claims, **characterized in that** at least one component, in particular the bus master, determines the sender of the transmitted data during the safety phase (100) after the recognition of the report of a safety-relevant event, in particular by evaluation of the safety telegram (110), with optionally a suitable response of the door drive being defined on the basis of the sender information.

8. A method in accordance with any one of the preceding claims, **characterized in that** the communication possibility over the data bus is maintained after the report of a safety-relevant event, i.e. a data transmission during the safety phase (100).

9. A method in accordance with any one of the preceding claims, **characterized in that** the motor of the door drive is stopped and/or reversed on recognition of a safety-relevant event.

10. A method in accordance with any one of the preceding claims, **characterized in that** the transmission process of a safety component transmitting during the safety phase (100) is repeated for so long until the safety component is addressed by the bus master.

11. A control system for a door drive having a plurality of components which are communicatively connected to one another via a digital bus system for carrying out the method in accordance with one of the preceding claims.

12. A door drive having a control system in accordance with claim 11.

## Revendications

1. Procédé de commande pour un entraînement de porte ayant plusieurs composants qui sont en liaison de communication les uns avec les autres via un système de bus numérique, au moins un composant étant un composant de sécurité qui signale, via le bus de données, la survenue d'un événement intéressant la sécurité,
**caractérisé en ce que**
le protocole de bus réserve une phase de sécurité cyclique (100) au signalement d'un événement intéressant la sécurité, aucune transmission de données ne s'effectuant pendant la phase de sécurité cyclique (100) pendant le fonctionnement régulier de l'entraînement de porte, et au moins un composant étant adapté pour détecter toute transmission de données via le système de bus pendant la phase de sécurité (100) en tant que signalement d'un événement intéressant la sécurité, et pour transmettre des données.

2. Procédé selon la revendication 1, **caractérisé en ce que** tous les composants sont informés du moment de départ et de fin respectif de la phase de sécurité.

3. Procédé selon la revendication 1 ou 2, **caractérisé en ce que** le système de bus est un système de bus maître-esclave sériel avec une fenêtre de communication cyclique, la fenêtre de communication contenant au moins un cycle d'interrogation précisément d'un composant esclave par le composant maître et au moins une phase de sécurité (100).

4. Procédé selon une des revendications précédentes, **caractérisé en ce que**, avant l'émission, chaque composant vérifie pendant la phase de sécurité si une transmission de données s'effectue déjà via le bus pendant la phase de sécurité (100) et éventuellement rejette son propre processus d'émission et/ou l'interrompt et/ou le repousse à un moment ultérieur.

5. Procédé selon une des revendications précédentes, **caractérisé en ce qu'**au moins un composant de sécurité, après la survenue d'au moins un événement intéressant la sécurité, transmet pendant la phase de sécurité (100) un télégramme de sécurité (110) qui contient de préférence des informations d'expéditeur, en particulier des informations concernant le type d'appareil du composant de sécurité qui émet.

6. Procédé selon la revendication 5, **caractérisé en ce que** le télégramme de sécurité commence par un préambule (111), le préambule (111) commençant de préférence par un nombre défini de multiplets ayant la valeur 0x00.

7. Procédé selon une des revendications précédentes, **caractérisé en ce qu'**au moins un composant, en particulier le bus-maître, après l'identification du signalement d'un événement intéressant la sécurité, détermine l'expéditeur des données transmises pendant la phase de sécurité (100), en particulier par l'analyse du télégramme de sécurité (110), une réaction adaptée de l'entraînement de porte étant éventuellement définie sur la base de l'information d'expéditeur.

8. Procédé selon une des revendications précédentes, **caractérisé en ce que**, après le signalement d'un événement intéressant la sécurité, c'est-à-dire une transmission de données pendant la phase de sécurité (100), la possibilité de communication via le bus de données reste maintenue.

9. Procédé selon une des revendications précédentes, **caractérisé en ce que** le moteur de l'entraînement de porte est arrêté et/ou mis en marche inverse lors de la détection d'un événement intéressant la sécurité.

10. Procédé selon une des revendications précédentes, **caractérisé en ce que** le processus d'émission d'un composant de sécurité émettant pendant la phase de sécurité (100) est répété jusqu'à ce que le composant de sécurité soit sollicité par le bus-maître.

11. Système de commande pour entraînement de porte ayant plusieurs composants qui sont en liaison de communication les uns avec les autres via un système de bus numérique, pour la réalisation du procédé selon une des revendications précédentes.

12. Entraînement de porte avec un système de commande selon la revendication 11.
